# EUROPÄISCHE PATENTSCHRIFT

(11) **EP 2 930 178 B1**
(45) Veröffentlichungstag und Bekanntmachung des Hinweises auf die Patenterteilung: **01.02.2017**
(21) Anmeldenummer: 15162057.2
(22) Anmeldetag: 31.03.2015
(51) Int. Cl.: C07F 7/12, C07F 7/20

(54) **DESTILLATION VON SILANGEMISCHEN IN ANWESENHEIT EINES NITRILS ODER AMINS**
DISTILLATION OF SILANE MIXTURES IN THE PRESENCE OF A NITRILE OR AMINE
DISTILLATION DE MÉLANGES DE SILANES EN PRÉSENCE D'UN NITRILE OU D'UNE AMINE

(30) Priorität: 09.04.2014 DE 102014206874
(43) Veröffentlichungstag der Anmeldung: 14.10.2015
(73) Patentinhaber: Wacker Chemie AG, 81737 München (DE)
(72) Erfinder: Mohsseni, Javad, 04105 Leipzig (DE); Mautner, Konrad, 84489 Burghausen (DE); Nürnberg, Peter, 01612 Leckwitz (DE); Kaltenmarkner, Christian, 84489 Burghausen (DE); Kaeppler, Klaus, 84489 Burghausen (DE); Bockholt, Andreas, 80805 München (DE)
(74) Vertreter: Fritz, Helmut

(56) Entgegenhaltungen:
- FR-A- 1 096 783

## Beschreibung

Die Erfindung betrifft ein Verfahren zur Destillation von Silangemischen in Anwesenheit eines Nitrils oder Amins.

Rohsilanmischungen, wie die Methylchlorsilane und Chlorsilane enthaltenden Mischungen aus der Direktsynthese (Müller-Rochow-Synthese) oder die Chlorsilanmischungen aus der Hydrochlorierung von metallurgischem Silizium können Metallhalogenide, Organometallhalogenide und Silane, insbesondere AlCl₃ enthalten. Die Silane in den Rohsilanen werden mittels Destillation in mehreren Stufen in Reinsilane getrennt. In den Destillaten findet man, insbesondere in höhersiedenden Fraktionen noch die genannten Verunreinigungen, insbesondere AlCl₃ im ppm Bereich. Die destillative Abtrennung von AlCl₃ ist recht aufwändig.

Acetonitril wird als Lösungsmittel für Aluminiumchlorid beschrieben [Zeitschrift für anorganische und allgemeine Chemie. Weinheim : Wiley-VCH, ISSN 0372-7874 Vol. 511 (4. 1984), S. 148]. Acetonitril darf nicht in Silangemische der Destillation eingeschleppt werden, da der Siedepunkt sehr nah bei Chlorsilanen oder Methylchlorsilanen liegt und dann selbst zur Verunreinigung würde.

FR 1096783 A beschreibt die Disproportionierung von Wasserstoff enthaltenden Silanen mit Aminen und Nitrilen als Katalysatoren.

Gegenstand der Erfindung ist ein Verfahren zur Destillation von Silangemischen in Anwesenheit eines Nitrils oder Amins oder Mischungen davon mit einem Siedepunkt von mindestens 120°C bei 1013 hPa, bei dem Metallchloride oder Organometallhalogenide oder Mischungen aus Metallhalogeniden und Organometallhalogeniden abgetrennt werden.

Durch Zugabe von höhersiedenden Nitrilen und/oder Aminen, wie z.B. Adipodinitril zu Metallchloriden oder Organometallhalogeniden oder Mischungen aus Metallhalogeniden und Organometallhalogeniden, insbesondere AlCl₃-haltigen Silanfraktionen der Chlorsilan- oder Methylchlorsilandestillationen, können Metallchloride und Organometallhalogenide, insbesondere AlCl₃, komplexiert werden. Dadurch sinkt der Dampfdruck der Metallchloride und Organometallhalogenide, insbesondere AlCl₃ ab. Es wird eine bessere Trennung von den Metallchloriden und Organometallhalogeniden erreicht, was wiederum zu höheren Ausbeuten an Silanen und weniger Abfall führt. Durch die kontinuierliche Zugabe von hochsiedenden Nitrilen und/oder Aminen z.B. Adipodinitril wird auch die Verschmutzungsneigung mit Metallchloriden und Organometallhalogeniden in Rohrleitungen und Behältern deutlich reduziert.

Die Metallchloride sind insbesondere mit Wasser zu Säuren hydrolysierende Metallchloride. Beispiele sind Chloride von Eisen, wie FeCl₂, FeCl₃, Kobalt, Nickel, Chrom, Titan, Zinn Kupfer, Zink und insbesondere AlCl₃.

Als Nitrile werden vorzugsweise eingesetzt die Nitrile von Monocarbonsäuren, die vorzugsweise 5 bis 20 Kohlenstoffatome, insbesondere 6 bis 12 Kohlenstoffatome enthalten.

Ebenfalls werden vorzugsweise eingesetzt die Nitrile von Polycarbonsäuren, die vorzugsweise 3 bis 20 Kohlenstoffatome, insbesondere 4 bis 10 Kohlenstoffatome enthalten.

Bevorzugt sind die Nitrile der aliphatischen, gesättigten Monocarbonsäuren, wie Valerian- und Capronsäure und der Fettsäuren mit bis zu 18 Kohlenstoffatomen.

Bevorzugt sind auch die Dinitrile der aliphatischen, gesättigten Dicarbonsäuren, wie Malon-, Bernstein-, Glutar-, Adipin-, Pimelin- und Suberinsäure.

Bevorzugt sind Nitrile mit einem Siedepunkt von mindestens 150°C bei 1013 hPa, insbesondere mindestens 200°C bei 1013 hPa.

Insbesondere bevorzugt ist Adipodinitril, welches bei 295°C bei 1013 hPa siedet und aufgrund seiner zwei Nitrilgruppen im Molekül eine starke komplexierende Wirkung auf Metallionen aufweist. Adipodinitril ist ein wichtiges Intermediate zur Herstellung von Polyamiden und daher leicht und kostengünstig verfügbar.

Vorzugsweise werden pro 100 Gewichtsteile Metallchloride 50 - 1000, insbesondere 100 bis 300 Gewichtsteile Nitril in die zu destillierenden Silangemische gegeben.

Das Verfahren wird vorzugsweise bei einem Druck von 500 hPa bis 2000 hPa, insbesondere von 900 hPa bis 1200 hPa durchgeführt.

Die Amine werden bevorzugt ausgewählt aus primären, sekundären und tertiären aliphatischen und aromatischen Aminen.

Es können Monoamine zum Einsatz sowie Polyamine, die sowohl primäre, sekundäre als auch tertiäre Aminfunktionen aufweisen.

Bevorzugte Monoamine weisen die allgemeine Formel (I)

NR¹R²R³ (I),

auf, in der
**R¹ R², R³** H oder einwertigen Kohlenwasserstoffrest mit 1-30 Kohlenstoffatomen, der substituiert sein kann mit Substituenten, die ausgewählt werden aus F-, Cl-, OH- und OR⁴, bei dem nicht benachbarte -CH₂-Einheiten ersetzt sein können durch Einheiten, die ausgewählt werden aus -C(=O)- und -O- und
**R⁴** Alkylrest mit 1-10 Kohlenstoffatomen bedeuten, mit der Maßgabe, dass die Monoamine einen Siedepunkt von mindestens 120°C bei 1013 hPa aufweisen.

Die einwertigen Kohlenwasserstoffreste **R¹, R², R³** können linear, zyklisch, verzweigt, aromatisch, gesättigt oder ungesättigt sein. Vorzugsweise sind tertiäre Amine, d.h. **R¹, R²** und **R³** sind einwertige Kohlenwasserstoffreste.

Vorzugsweise weisen die Kohlenwasserstoffreste **R¹, R², R³** 1 bis 20 Kohlenstoffatome auf, besonders bevorzugt sind Alkylreste mit 1 bis 6 Kohlenstoffatomen, Alkylarylreste, Arylalkylreste und Phenylreste. Vorzugsweise weisen die einwertigen Kohlenwasserstoffreste **R¹, R², R³** zusammen mindestens 6, insbesondere mindestens 10 Kohlenstoffatome auf.

Bevorzugte Polyamine weisen die allgemeine Formel (II)

R⁵₂N-(CR⁶₂)ₓ-(NR⁷-(CR⁶₂)_{y})_{z}-NR⁵₂ (II),

auf, in der
**R⁵, R⁶, R⁷** H oder Kohlenwasserstoffreste mit 1-18 Kohlenstoffatomen, die substituiert sein können mit Substituenten, die ausgewählt werden aus F-, Cl- und OH- und bei denen nicht benachbarte -CH₂-Einheiten ersetzt sein können durch Einheiten, die ausgewählt werden aus -C(=O)- und -O-,
**x, y** ganzzahlige Werte von 1 bis 6 und
**z** den Wert 0 oder einen ganzzahligen Wert von 1 bis 40 bedeuten, mit der Maßgabe, dass die Polyamine einen Siedepunkt von mindestens 120°C bei 1013 hPa aufweisen.
**x, y** bedeuten vorzugsweise die Werte 2 oder 3.
**z** bedeutet vorzugsweise einen ganzzahligen Wert von 1 bis 6. Vorzugsweise sind **x** und **y** gleich.
Vorzugsweise weisen die einwertigen Kohlenwasserstoffreste **R⁵, R⁶, R⁷** zusammen mindestens 4, insbesondere mindestens 6 Kohlenstoffatome auf.

Beispiele für besonders bevorzugte Polyamine (A) der allgemeinen Formel (II) sind:
Diethylentriamin (H₂N-CH₂CH₂-NH-CH₂CH₂-NH₂)
Triethylentetramin (H₂N-CH₂CH₂-(NH-CH₂CH₂-)₂-NH₂)
Tetraethylenpentamin (H₂N-CH₂CH₂-(NH-CH₂CH₂-)₃-NH₂)
Pentaethylenhexamin (H₂N-CH₂CH₂-(NH-CH₂CH₂-)₄-NH₂)
Hexaethylenheptamin (H₂N-CH₂CH₂-(NH-CH₂CH₂-)₅-NH₂)
Gemische der o.g. Amine, wie sie als technische Produkte käuflich erhältlich sind z.B. AMIX1000^{®} (BASF SE).

Beispiele für weitere bevorzugte Monoamine und Polyamine sind Octylamin, Nonylamin, Decylamin, Undecylamin, Dodecylamin (Laurylamin), Tridecylamin, Tridecylamin (Isomerengemisch), Tetradecylamin (Myristylamin), Pentadecylamin, Hexadecylamin (Cetylamin), Heptadecylamin, Octadecylamin (Stearylamin), 4-Hexylanilin, 4-Heptylanilin, 4-Octylanilin, 2,6-Diisopropylanilin, 4-Ethoxyanilin, N-Methylanilin, N-Ethylanilin, N-Propylanilin, N-Butylanilin, N-Pentylanilin, N-Hexylanilin, N-Octylanilin, N-Cyclohexylanilin, Dicyclohexylamin, p-Toluidin, Indolin, 2-Phenylethylamin, 1-Phenylethylamin, N-Methyldecylamin, Benzylamin, N,N-Dimethylbenzylamin, 1-Methylimidazol, 2-Ethylhexylamin, Dibutylamin, Dihexylamin, Di-(2-ethylhexylamin), 3,3'-Dimethyl-4,4'-diaminodicyclohexylmethan, 4,4'-Diaminodicyclohexylmethan, Ditridecylamin (Isomerengemisch), Isophorondiamin, N,N,N',N'-Tetramethyl-1,6-hexandiamin, N,N-Dimethylcyclohexylamin, Octamethylendiamin, 2,6-Xylidin, 4,7,10-Trioxatridecan-1,13-diamin, 4,9-Dioxadodecan-1,12-diamin, Di-(2-methoxyethyl)amin, Bis(2-dimethylaminoethyl)ether, Polyetheramin D230^{®} (BASF SE), 2-(Diisopropylamino)ethylamin, Pentamethyldiethylentriamin, N-(3-Aminopropyl)imidazol, 1,2-Dimethylimidazol, 2,2'-Dimorpholinodiethylether, Dimethylaminoethoxyethanol, Bis(2-dimethylaminoethyl)ether, Lupragen^{®}N600 - S-Triazin (BASF AG), 1,8-Diazabicyclo-5,4,0-undecen-7 (DBU), 3-(2-Aminoethylamino)propylamin, 3-(Cyclohexylamino)propylamin, Dipropylentriamin, N4-Amin (N,N'-Bis(3-aminopropyl)-ethylendiamin), AMIX M (BASF AG) (=hochsiedende Morpholinderivate), 1-(2-Hydroxyethyl)piperazin, 2-(2-Aminoethoxy)ethanol, 3-Amino-1-propanol, 3-Dimethylaminopropan-1-ol, 4-(2-Hydroxyethyl)morpholin, Butyldiethanolamin, N-Butylethanolamin, N,N-Dibutylethanolamin, N,N-Diethylethanolamin, Dimethylaminoethoxyethanol (Lupragen^{®}N107, BASF AG), Methyldiethanolamin, Diethanolamin, Triethanolamin, Diisopropanolamin, Triisopropanolamin, 1-Vinylimidazol, 1-Hexylimidazol, 1-Octylmidazol, 1-(2-Ethylhexyl-)imidazol, Triisooctylamin.

Bevorzugt sind Amine mit einem Siedepunkt von mindestens 150°C bei 1013 hPa, insbesondere mindestens 200°C bei 1013 hPa.

In einer bevorzugten Ausführungsform enthalten die Silangemische Silane der allgemeinen Formel (1)

RₐH_{b}SiCl_{4-a-b} (1),

in der
- **R**: einen Alkylrest mit 1 bis 6 Kohlenstoffatomen,
- **a**: die Werte 0, 1, 2, 3 oder 4 und
- **b**: die Werte 0, 1 oder 2
bedeuten.

Vorzugsweise bedeutet **R** einen Methylrest.

In einer bevorzugten Ausführungsform bedeutet **a** die Werte 1, 2 oder 3. Vorzugsweise bedeutet **b** die Werte 0 oder 1.

In einer anderen bevorzugten Ausführungsform bedeutet **a** den Wert 0. Vorzugsweise bedeutet **b** die Werte 1 oder 2.

Die Metallchloride und Organometallhalogenide in den Rohsilanmischungen werden vorzugsweise destillativ von den Silanen getrennt. Bei der Destillation werden Silane abdestilliert und die Metallchloride und Organometallhalogenide bleiben im Sumpf und werden beispielsweise entsorgt, z.B. durch Verbrennung.

In einer weiteren bevorzugten Ausführungsform enthalten die destillierten Silangemische Disilane, welche Substituenten aufweisen, die ausgewählt werden aus Chlor und Methyl.

Bei der Destillation von Disilanen aus Hochsiedersilanmischungen werden Temperaturen und Drucke benötigt, bei denen viele Metallchloride und Organometallhalogenide, insbesondere AlCl₃ bereits merklichen Dampfdruck entwickeln. Die Metallchloride und Organometallhalogenide werden ohne den Zusatz Nitrile im Destillat mit abdestilliert. Disilane können durch Reaktion mit HCl in Anwesenheit von Aminkatalysator (z.B. Tributylamin) zu Monosilanen gespalten werden. Metallchloride und Organometallhalogenide in Disilanen führen zur Deaktivierung des Katalysators.

Für die Destillation von Silangemischen, welche Disilane enthalten, werden bevorzugt Nitrile mit einem Siedepunkt von mindestens 200°C bei 1013 hPa eingesetzt.

## Patentansprüche

1. Verfahren zur Destillation von Silangemischen in Anwesenheit eines Nitrils oder Amins oder Mischungen davon mit einem Siedepunkt von mindestens 120°C bei 1013 hPa, bei dem Metallchloride oder Organometallhalogenide oder Mischungen aus Metallhalogeniden und Organometallhalogeniden abgetrennt werden.

2. Verfahren nach Anspruch 1, bei dem die Metallchloride und Organometallhalogenide ausgewählt werden aus Chloriden von Eisen, Kobalt, Nickel, Chrom, Titan, Zinn, Kupfer, Zink und AlCl₃.

3. Verfahren nach einem oder mehreren der vorangehenden Ansprüche, bei dem die Nitrile ausgewählt werden aus Nitrilen von Monocarbonsäuren, die 5 bis 20 Kohlenstoffatome enthalten und Nitrilen von Polycarbonsäuren, die 3 bis 20 Kohlenstoffatome enthalten.

4. Verfahren nach einem oder mehreren der vorangehenden Ansprüche, bei dem Adipodinitril eingesetzt wird.

5. Verfahren nach einem oder mehreren der vorangehenden Ansprüche, bei dem pro 100 Gewichtsteile Metallchloride 50 -1000 Gewichtsteile Nitril in die zu destillierenden Silangemische gegeben werden.

6. Verfahren nach einem oder mehreren der vorangehenden Ansprüche, bei dem die Silangemische Silane der allgemeinen Formel (1)
RₐH_{b}SiCl_{4-a-b} (1),
aufweisen, in der
**R** einen Alkylrest mit 1 bis 6 Kohlenstoffatomen,
**a** die Werte 0, 1, 2, 3 oder 4 und
**b** die Werte 0, 1 oder 2
bedeuten.

7. Verfahren nach einem oder mehreren der vorangehenden Ansprüche, bei dem die Silangemische Disilane enthalten, welche Substituenten aufweisen, die ausgewählt werden aus Chlor und Methyl.

8. Verfahren nach Anspruch 7, bei dem Nitrile oder Amine oder Mischungen davon mit einem Siedepunkt von jeweils mindestens 200°C bei 1013 hPa eingesetzt werden.

## Claims

1. Process for the distillation of silane mixtures in the presence of a nitrile or amine or mixtures thereof having a boiling point of at least 120°C at 1013 hPa, wherein metal chlorides or organometal halides or mixtures of metal halides and organometal halides are separated off.

2. Process according to Claim 1, wherein the metal chlorides and organometal halides are selected from among chlorides of iron, cobalt, nickel, chromium, titanium, tin, copper, zinc and AlCl₃.

3. Process according to one or more of the preceding claims, wherein the nitriles are selected from among nitriles of monocarboxylic acids containing from 5 to 20 carbon atoms and nitriles of polycarboxylic acids containing from 3 to 20 carbon atoms.

4. Process according to one or more of the preceding claims, wherein adipodinitrile is used.

5. Process according to one or more of the preceding claims, wherein 50 - 1000 parts by weight of nitrile per 100 parts by weight of metal chlorides are added to the silane mixtures to be distilled.

6. Process according to one or more of the preceding claims, wherein the silane mixtures comprise silanes of the general formula (1)
RₐH_{b}SiCl₄₋ₐ-_{b} (1),
where
**R** is an alkyl radical having from 1 to 6 carbon atoms,
**a** is 0, 1, 2, 3 or 4 and
**b** is 0, 1 or 2.

7. Process according to one or more of the preceding claims, wherein the silane mixtures contain disilanes having substituents selected from among chlorine and methyl.

8. Process according to Claim 7, wherein nitriles or amines or mixtures thereof having a boiling point of in each case at least 200°C at 1013 hPa are used.

## Revendications

1. Procédé pour la distillation de mélanges de silanes en présence d'un nitrile ou d'une amine ou de mélanges de ceux-ci ayant un point d'ébullition d'au moins 120 °C sous 1 013 hPa, dans lequel sont séparés des chlorures métalliques ou des halogénures organométalliques ou des mélanges d'halogénures métalliques et d'halogénures organométalliques.

2. Procédé selon la revendication 1, dans lequel les chlorures métalliques et les halogénures organométalliques sont choisis parmi les chlorures de fer, cobalt, nickel, chrome, titane, étain, cuivre, zinc et AlCl₃.

3. Procédé selon une ou plusieurs des revendications précédentes, dans lequel les nitriles sont choisis parmi les nitriles d'acides monocarboxyliques qui contiennent de 5 à 20 atomes de carbone et les nitriles d'acides polycarboxyliques qui contiennent de 3 à 20 atomes de carbone.

4. Procédé selon une ou plusieurs des revendications précédentes, dans lequel on utilise l'adipodinitrile.

5. Procédé selon une ou plusieurs des revendications précédentes, dans lequel on introduit dans les mélanges de silanes à distiller 50 - 1 000 parties en poids de nitrile pour 100 parties en poids de chlorures métalliques.

6. Procédé selon une ou plusieurs des revendications précédentes, dans lequel les mélanges de silanes comportent des silanes de formule générale (1)
RₐH_{b}SiCl_{4-a-b} (1),
dans laquelle
**R** représente un radical alkyle ayant de 1 à 6 atomes de carbone,
**a** représente les valeurs 0, 1, 2, 3 ou 4 et
**b** représente les valeurs 0, 1 ou 2.

7. Procédé selon une ou plusieurs des revendications précédentes, dans lequel les mélanges de silanes contiennent des silanes qui comportent des substituants qui sont choisis parmi chloro et méthyle.

8. Procédé selon la revendication 7, dans lequel on utilise des nitriles ou des amines ou des mélanges de ceux-ci ayant chacun un point d'ébullition d'au moins 200 °C sous 1 013 hPa.
